# FASCICULE DE BREVET EUROPEEN

(11) **EP 3 196 485 B1**
(45) Date de publication et mention de la délivrance du brevet: **19.12.2018**
(21) Numéro de dépôt: 16199893.5
(22) Date de dépôt: 21.11.2016
(51) Int. Cl.: F16B 7/04, F16B 7/18, A63B 63/00

(54) **ADAPTATEUR POUR LE COUPLAGE D'UN POTEAU A UN FOURREAU SCELLE DANS UN SOL**
ADAPTER FÜR DIE VERBINDUNG EINES STÄNDERS MIT EINER VERSIEGELUNGSHÜLSE IN EINEM BODEN
ADAPTER FOR COUPLING A POST TO A SEALED TUBE IN THE GROUND

(30) Priorité: 23.01.2016 FR 1650541
(43) Date de publication de la demande: 26.07.2017
(73) Titulaire: Marty Sports, 49370 Saint Clement de la Place (FR)
(72) Inventeur: MARTINEZ, Stéphane, 49070 SAINT JEAN DE LINIERE (FR)
(74) Mandataire: Gicquel, Frédéric

(56) Documents cités:
- WO-A1-90/10133
- WO-A1-97/08410
- DE-U1- 9 113 821
- DE-U1-202014 002 205
- GB-A- 2 469 147
- US-A1- 2006 239 764

## Description

Le domaine de l'invention est celui des techniques d'installation et de couplage au sol d'équipements extérieurs sportifs et/ou urbains.

Plus précisément, l'invention concerne les poteaux destinés à être emboîtés dans des fourreaux scellés à même le sol.

Des équipements extérieurs (ensembles sportifs, mobiliers urbains, poteaux de signalisation, ...) peuvent être installés dans un lieu et couplés au sol de manière réversible. Selon une méthode d'installation, des fourreaux sont scellés dans le sol, par exemple à l'intérieur d'un bloc béton, et des poteaux sont emboités à l'intérieur de ces fourreaux. Les équipementiers concevant et mettant en oeuvre ces solutions emploient des fourreaux et des poteaux présentant des profils complémentaires.

Cette méthode d'installation implique d'avoir des poteaux présentant un profil identique pour la bonne tenue du poteau dans le fourreau correspondant. Or, en cas de remplacement de l'équipement ou du mobilier en question, cette situation oblige notamment des équipementiers, qui n'ont pas effectué la première installation et qui n'ont pas de poteaux avec un profil complémentaire, de devoir réaliser des adaptations complexes pour installer leurs équipements extérieurs avec leurs poteaux, en lieu et place de l'ancien équipement.

Par exemple, dans le domaine des équipements sportifs, il existe des réglementations issues de normes européennes mais aussi de fédérations internationales et nationales.

Pour les buts de football, ces règlementations peuvent imposer une section de profils de poteaux comprises entre 100 et 120 mm de diamètre. Entre ces deux cotes, la section du poteau peut être variable. En conséquence, d'un équipementier sportif à un autre, la forme des profils du but, et ainsi des poteaux, peut varier. Ces variations sont notamment dépendantes de la filière de création employée pour réaliser les poteaux, et des matériaux employés. On peut ainsi retrouver des profils de buts de section sensiblement carrée, et d'autres présentant un ou plusieurs côtés plus arrondis.

Tel qu'évoqué précédemment, de tels buts ne sont pas scellés directement dans le sol. Les poteaux de buts sont emboités dans des fourreaux préalablement scellés dans le sol. Ces fourreaux présentent une forme spécialement adaptée aux poteaux. Cette spécificité de forme permet un emboitement parfait des poteaux dans les fourreaux, permettant d'obtenir une rigidité et une mise en place parfaite de l'équipement sportif.

Cette méthode d'installation présente néanmoins comme inconvénient de ne pas permettre une installation a posteriori d'un nouvel équipement sportif de manière aisée. En conséquence, si un utilisateur veut faire appel à un équipementier sportif d'une marque différente, des difficultés de compatibilité peuvent apparaitre. En effet, pour changer les buts, il apparaît alors nécessaire de changer les fourreaux scellés dans le sol.

Pour réaliser ce changement de fourreaux, il faut découper la pelouse, casser les blocs béton et sceller de nouveaux fourreaux compatibles avec le profil des poteaux des buts de l'équipementier sportif. Il s'agit d'une opération lourde, onéreuse et complexe, par exemple du fait que la pelouse ou que des équipements enterrés (réseau de chauffage, ...) risquent d'être endommagés pendant les travaux.

Des équipementiers sportifs peuvent néanmoins réaliser des adaptations au cas par cas. En effet, l'équipementier doit alors prendre des mesures de cotes sur site, pour adapter en atelier et fabriquer des poteaux compatibles avec les fourreaux déjà scellés au sol.

Cette méthode d'adaptation est cependant compliquée à mettre en oeuvre et chronophage. Elle nécessite beaucoup d'interventions et entraîne une prise de risques et des coûts importants.

Par ailleurs, les documents de brevet publiés sous les numéros WO90/10133, WO97/08410, GB2469147 et DE9113821 décrivent des techniques d'assemblages de poteaux ou de tubes dans des fourreaux. Ces techniques impliquent la déformation d'un élément métallique à l'aide d'un organe à visser, la déformation venant assurer le couplage du poteau dans le fourreau. Cette déformation peut être définitive, ce qui peut rendre l'ensemble indémontable. En tout état de cause, il n'est pas possible de procéder au désassemblage sans outil.

L'invention a notamment pour objectif de pallier ces inconvénients de l'art antérieur.

Plus précisément, l'invention a pour objectif de proposer une solution simple à mettre en oeuvre pour changer un équipement présentant un poteau inséré à l'intérieur d'un fourreau scellé dans un sol.

L'invention a également pour objectif de proposer une telle solution qui soit moins invasive vis-à-vis de l'environnement de l'équipement par rapport à ce qui est permis par l'art antérieur.

L'invention a encore pour objectif de proposer une telle solution qui est moins chronophage et onéreuse à mettre en oeuvre par rapport à ce qui est permis par l'art antérieur.

Ces objectifs, ainsi que d'autres qui apparaîtront par la suite sont atteints grâce à l'invention qui a pour objet une pièce d'accouplement pour le couplage d'un poteau à un fourreau scellé dans un sol, le fourreau présentant une cavité destinée à recevoir l'extrémité basse d'un poteau selon un axe d'insertion, caractérisée en ce qu'elle consiste en un adaptateur comprenant :
- une partie basse présentant au moins une zone à forme variable comportant au moins un élément de contact externe extensible dans un plan perpendiculaire à l'axe d'insertion, chaque élément de contact externe étant associé à un moyen de réglage en extension permettant d'ajuster la partie basse à la cavité du fourreau en vue de les coupler par encastrement et de maintenir fixe la partie basse dans le fourreau ;
- une partie haute destinée à être couplée à la base d'un poteau,
chaque élément de contact externe consistant en une tête de vis, le moyen de réglage en extension associé consistant en une tige filetée s'étendant à partir de la tête de vis, la tige filetée étant complémentaire d'un trou horizontal taraudé situé sur la partie basse, et la partie basse comportant un pied réglable en hauteur situé dans le prolongement de la partie basse.

Selon le principe de l'invention, l'installation d'un nouvel équipement sportif sur un site, en remplacement d'un ancien équipement sportif (mettant en oeuvre des poteaux emboités dans des fourreaux scellés dans le sol) ne nécessite pas le remplacement des fourreaux déjà installés. Aussi, l'invention permet à un équipementier de ne pas avoir à réaliser une solution sur mesure complexe et onéreuse à mettre en oeuvre.

En effet, grâce à l'invention, un équipementier n'a pas besoin d'avoir une compatibilité spécifique entre un fourreau scellé dans un sol et un poteau destiné à être coupé en position grâce au fourreau. Le nouvel équipement sportif dispose alors de poteaux qui ne sont pas directement emboités dans le fourreau mais qui sont maintenus en position grâce à l'adaptateur qui sert d'interface entre le fourreau et le poteau.

L'adaptateur selon l'invention présente en conséquence une partie haute spécifique des poteaux que l'équipementier souhaite utiliser, et une partie basse qui a la capacité d'être adaptée en vue d'être encastrée et maintenue fixe dans le fourreau.

Cette solution est ainsi simple et rapide à mettre en oeuvre pour changer un équipement présentant un poteau inséré à l'intérieur d'un fourreau scellé dans un sol.

Aussi, cette solution n'entraîne pas une intervention destructive de l'environnement dans lequel le ou les fourreaux sont scellés.

On note par ailleurs que la conception des éléments de contact externe et des moyens de réglage en extension associés est particulièrement simple et économique à mettre en oeuvre.

On note également que, selon le principe de l'invention, l'adaptateur peut être ajusté en hauteur à l'intérieur du fourreau. Grâce à ce pied réglable en hauteur, le poteau destiné à être couplé sur l'adaptateur peut être ajusté à la hauteur du sol dans lequel le fourreau est scellé, et ce même a posteriori si la hauteur du sol venait à être modifiée.

Ainsi, l'invention est étudiée pour des démontages et montages fréquents, ceci sans outillage car le réglage est définitif. En effet, la combinaison des éléments de contacts qui peuvent être réglés en position venir en butée contre la paroi interne du fourreau, avec le pied réglable en hauteur permet non pas une fixation de la pièce d'accouplement dans le fourreau qui la reçoit, mais seulement un ajustement en position, avec mise en butée contre les parois de côté internes du fourreau et mise en appui au fond du fourreau. Il est donc possible de le retirer sans outil puisqu'il n'est pas fixé, puis de le remettre en place dans le même fourreau avec maintien des réglages.

Un autre avantage du pied réglable en hauteur apparaît, par exemple, dans le cadre des terrains sportifs, lors de l'entretien d'un gazon, dans le cas où il est nécessaire d'étendre du sable, ce qui a pour effet de surélever le niveau du sol. Grâce au pied réglable de l'adaptateur selon l'invention, la hauteur du ou des poteaux d'un équipement sportif peut être ajustée très précisément de manière à ce que l'extrémité basse du ou des poteaux affleure le sol. En conséquence, la hauteur d'un équipement peut être assurée a posteriori, même si la hauteur du sol subit des variations.

Préférentiellement, la partie haute forme un organe mâle d'emboîtement et est destinée à émerger du fourreau dans lequel la partie basse est encastrée, l'organe mâle d'emboîtement étant destiné à être emboîté dans un poteau creux.

Selon un mode de réalisation avantageux, la partie basse présente deux zones à forme variable séparées en hauteur l'une de l'autre sur la partie basse.

Ces deux zones à forme variable, qui sont séparées en hauteur l'une de l'autre sur la partie basse, permettent d'optimiser le couplage de l'adaptateur dans un fourreau. Ces deux zones permettent aussi d'adapter la position prise par l'adaptateur à l'intérieur du fourreau. Plus précisément, grâce à ces deux zones à forme variable, des erreurs de scellement en verticalité et en entraxe peuvent être récupérées de manière à avoir un poteau s'étendant parfaitement à la verticale à partir du fourreau.

Selon une première variante de réalisation, chaque zone à forme variable comporte trois éléments de contact externe extensibles dans un plan perpendiculaire à l'axe d'insertion, les trois éléments de contact externe étant régulièrement répartis autour de la partie basse.

Dans cette première variante de réalisation, la présence de trois éléments de contact externe permet d'assurer un parfait réglage en verticalité de l'adaptateur, et un parfait encastrement de l'adaptateur dans un fourreau.

Selon une deuxième variante de réalisation, chaque zone à forme variable comporte quatre éléments de contact externe extensibles dans un plan perpendiculaire à l'axe d'insertion, les quatre éléments de contact externe étant régulièrement répartis autour de la partie basse.

Dans cette deuxième variante de réalisation, les quatre éléments de contact externe de chaque zone à forme variable permettent de faciliter l'ajustement d'un adaptateur à un fourreau. En effet, les éléments de contact externe sont alors répartis tous les 90° autour de la partie basse, et en conséquence, la verticalité est ajustée simplement en modifiant la profondeur d'extension de deux éléments situés en vis-à-vis de part et d'autre de la partie basse.

Avantageusement, chaque moyen de réglage en extension comporte un moyen de blocage en extension prenant la forme d'un écrou couplé sur la tige filetée entre la tête de vis et le trou horizontal taraudé.

Un tel écrou permet de verrouiller de manière simple et économique le réglage en extension de la vis dans un trou taraudé sur la partie basse.

Préférentiellement, le pied réglable en hauteur comporte une tige filetée complémentaire d'un trou vertical taraudé situé sur la partie basse, et un écrou de blocage du réglage en hauteur.

Une telle conception du pied réglable en hauteur est simple et économique à mettre en oeuvre.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une représentation schématique, selon une vue éclatée, d'un fourreau, d'un adaptateur selon l'invention et de l'extrémité basse d'un poteau ;
- la figure 2 est une représentation schématique d'un adaptateur selon l'invention couplé par encastrement et maintenu fixe dans un fourreau ;
- la figure 3 est une représentation schématique selon une vue éclatée d'un adaptateur selon l'invention ;
- la figure 4 est une représentation schématique d'une vue du dessus d'un adaptateur selon l'invention ;
- la figure 5 est une représentation schématique selon une vue latérale d'un adaptateur selon l'invention.

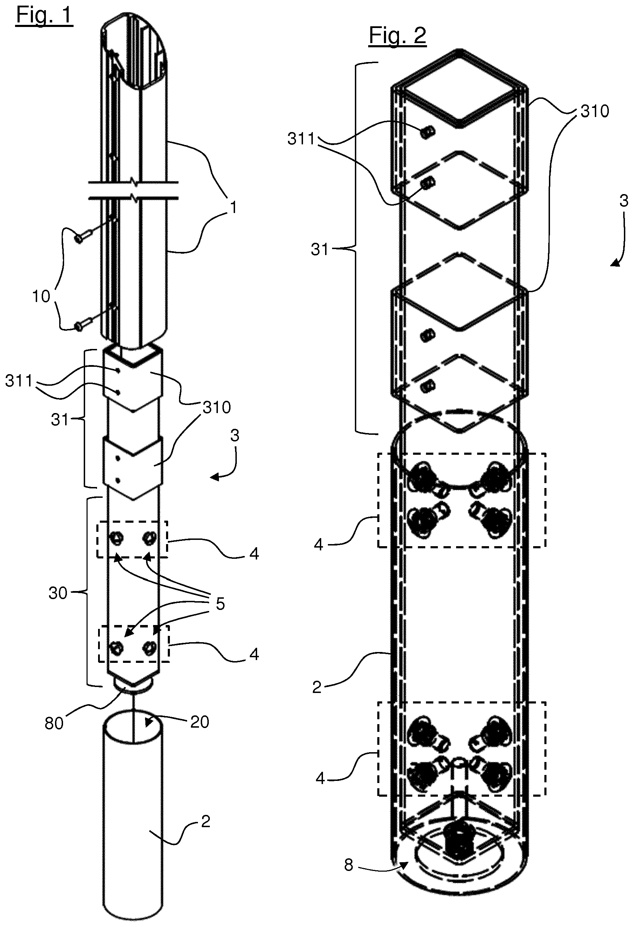

Tel que l'on peut l'observer sur la figure 1, l'invention a pour objet une pièce d'accouplement permettant de coupler un poteau 1 à un fourreau 2 scellé dans un sol.

Le fourreau 2 présente une cavité 20 normalement destinée à recevoir l'extrémité basse d'un poteau selon un axe d'insertion.

Selon le principe de l'invention, la pièce d'accouplement consiste en un adaptateur 3. Cet adaptateur est destiné à être encastré et maintenu en position dans le fourreau. Plus précisément, l'adaptateur 3 comprend une partie basse 30 et une partie haute 31.

La partie basse est destinée à être encastrée dans la cavité du fourreau et maintenue fixe à l'intérieur de cette cavité.

La partie haute 31, quant à elle, est destinée à être couplée à la base d'un poteau. Selon un exemple non illustré, cette partie haute peut être soudée à l'extrémité basse d'un poteau.

Selon le présent mode de réalisation, la partie haute émerge du fourreau une fois que la partie basse est encastrée à l'intérieur de la cavité. Cette partie haute forme un organe mâle d'emboitement destiné à être emboité à l'intérieur du poteau 1 qui est creux.

En conséquence, le poteau 1 ne s'insère pas à l'intérieur du fourreau.

L'adaptateur permet ainsi de coupler ensemble un fourreau et un poteau qui présenterait une forme ne lui permettant pas d'être inséré dans le fourreau et/ou d'être maintenu fixe à l'intérieur du fourreau.

Tel que l'on peut l'observer sur les figures 1 et 2, la partie basse 30 a une forme lui permettant d'être insérée dans un fourreau 2. Plus précisément, la partie basse 30 présente au moins une zone à forme variable 4.

Ces zones à forme variable 4 comportent au moins un élément de contact externe 5 extensible dans un plan perpendiculaire à l'axe d'insertion de l'adaptateur dans le fourreau. Chaque élément de contact externe est associé à un moyen de réglage en extension. Ces moyens de réglage en extension permettent d'ajuster la partie basse à la cavité d'un fourreau pour coupler par encastrement et maintenir fixe la partie basse à l'intérieur de la cavité 20 d'un fourreau 2.

En effet, les zones à forme variable peuvent être ajustées de manière à ce que les éléments de contact externe 5 viennent en contact avec la paroi interne de la cavité 20 d'un fourreau 2 lors de l'insertion d'un adaptateur à l'intérieur d'un fourreau. Ce contact des éléments de contact externe permet de réaliser un encastrement destiné à maintenir fixe la partie basse de l'adaptateur à l'intérieur du fourreau.

Tel que l'on peut l'observer sur la figure 2, une fois l'adaptateur encastré et maintenu fixe à l'intérieur d'un fourreau 2, la partie haute 31 de l'adaptateur émerge du fourreau. Tel qu'évoqué précédemment, cette partie haute 31 forme alors un organe mâle d'emboitement. Cet organe mâle d'emboitement est alors destiné à être emboité dans un poteau 1 creux.

Plus précisément tel que l'on peut l'observer sur les figures 1 et 2, la partie haute 31 présente deux surépaisseurs 310 présentant des trous de fixation 311. Selon la figure 1, le poteau 1 est creux et présente une cavité complémentaire des surépaisseurs 310. Le poteau 1 peut ainsi être emboité sur la partie haute par l'intermédiaire des surépaisseurs, puis être couplé de manière fixe sur les surépaisseurs par l'intermédiaire de vis de fixation 10.

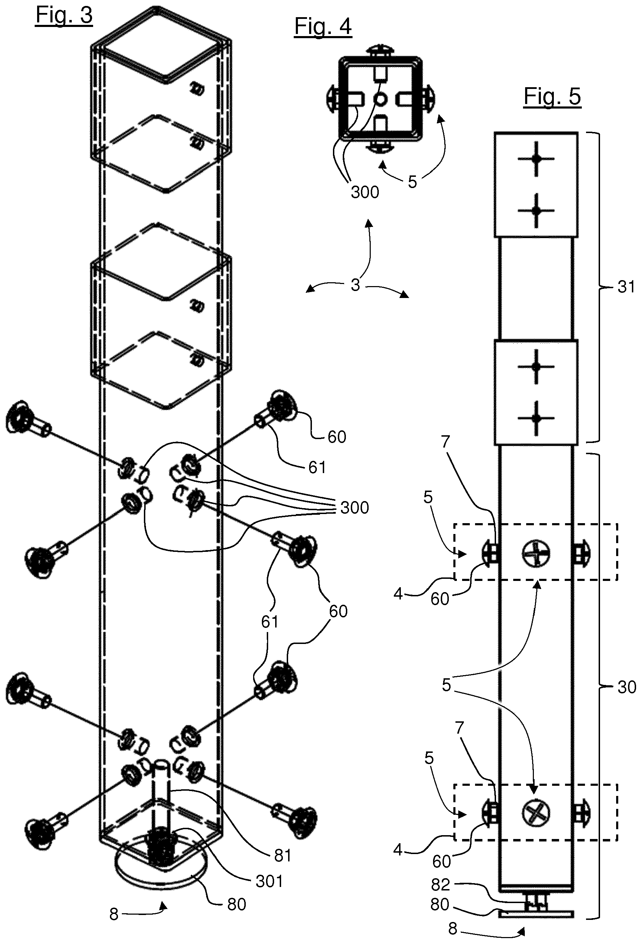

Tel que l'on peut l'observer sur les figures 1 à 3 et sur la figure 5, la partie basse 30 présente deux zones à forme variable 4 qui sont séparées en hauteur l'une de l'autre sur la partie basse. Ainsi grâce à ces deux zones à forme variable 4, la disposition de l'adaptateur 3 dans un fourreau peut être ajusté pour récupérer des erreurs de scellement en verticalité d'un fourreau dans un sol.

En effet, en ayant deux éléments de contact externe appartenant chacun à une zone à forme variable différente, des différences de réglage en extension de chaque élément de contact externe permettent de modifier l'axe d'insertion de l'adaptateur dans le fourreau.

Selon le présent mode de réalisation illustré par la figure 4, l'adaptateur 3 présente une section carrée. Tel que l'on peut l'observer, chaque zone à forme variable 4 comporte ainsi quatre éléments de contact externe 5 extensibles dans un plan perpendiculaire à l'axe d'insertion. Ces quatre éléments de contact externe sont régulièrement répartis autour de la partie basse 30. Plus précisément les éléments de contact externe sont répartis sur chaque face de l'adaptateur.

Bien entendu, selon d'autres modes de réalisation non illustrés, l'adaptateur peut présenter d'autre forme de profil (triangulaire, ronde, ...).

Aussi, les zones à forme variable peuvent présenter uniquement trois éléments de contact externe extensibles dans un plan perpendiculaire à l'axe d'insertion, ces trois éléments de contact externe étant destinés à être régulièrement répartis autour de la partie basse. En effet, trois éléments de contact externe suffisent à permettre d'ajuster la forme d'une zone à forme variable en vue de permettre le couplage en encastrement de la partie basse à l'intérieur d'un fourreau.

Tel que l'on peut l'observer sur la figure 3, chaque élément de contact externe 5 consiste en une tête de vis 60, le moyen de réglage en extension associé consiste en une tige filetée 61 s'étendant à partir de la tête de vis. La partie basse 30 présente alors un trou horizontal taraudé 300 complémentaire de la tige filetée.

Selon le présent mode de réalisation, le réglage en extension des éléments de contact externe 5 est réalisé en vissant ou en dévissant les vis. En conséquence, en réglant chaque vis, seules les têtes de vis 60 sont destinées à venir en contact avec la paroi formant la cavité d'un fourreau lors de l'insertion de la partie basse 30 à l'intérieur d'un fourreau.

Tel que l'on peut l'observer sur la figure 5, les moyens de réglage en extension comporte chacun un moyen de blocage en extension. Ces moyens de blocage en extension prennent la forme d'écrous 7 qui sont couplés sur les tiges filetées 61 entre les têtes de vis 60 et les trous horizontaux taraudés 300. Lors du réglage en extension d'un élément de contact externe, l'écrou 7 est destiné à être vissé sur la tige filetée 61 de manière à venir en contact avec la partie basse, au niveau du trou horizontal taraudé 300, pour empêcher à la vis de subir une modification de son réglage en extension postérieurement à l'insertion de la partie basse de l'adaptateur à l'intérieur du fourreau.

Tel que l'on peut l'observer sur les figures 2, 3 et 5, la partie basse 30 comporte un pied 8 réglable en hauteur. Ce pied réglable en hauteur est situé dans le prolongement de la partie basse.

Selon les figures 1, 2, 3 et 5, le pied réglable en hauteur présente une plaque de pied 80. Tel qu'illustré par les figures 3 et 5, cette plaque de pied 80 est couplée à une tige filetée 81 complémentaire d'un trou vertical taraudé 301 situé sur la partie basse 30. On peut observer sur la figure 1 qu'un écrou de blocage 82 du réglage en hauteur du pied réglable est situé sur la tige filetée 81. Cet écrou de blocage 82 est destiné à venir en appui sur la partie basse 30, au contact du trou vertical taraudé 301, de manière à verrouiller le réglage en hauteur de la plaque de pied 80.

Selon un exemple de mise en oeuvre, l'adaptateur est réalisé en acier ou en aluminium.

## Revendications

1. Pièce d'accouplement pour le couplage d'un poteau (1) à un fourreau (2) scellé dans un sol, le fourreau présentant une cavité (20) destinée à recevoir l'extrémité basse d'un poteau selon un axe d'insertion, consistant en un adaptateur (3) comprenant :
- une partie basse (30) présentant au moins une zone à forme variable (4) comportant au moins un élément de contact externe (5) extensible dans un plan perpendiculaire à l'axe d'insertion, chaque élément de contact externe étant associé à un moyen de réglage en extension permettant d'ajuster la partie basse à la cavité du fourreau en vue de les coupler par encastrement et de maintenir fixe la partie basse dans le fourreau ;
- une partie haute (31) destinée à être couplée à la base d'un poteau,
**caractérisée en ce que** chaque élément de contact externe (5) consiste en une tête de vis (60), le moyen de réglage en extension associé consiste en une tige filetée (61) s'étendant à partir de la tête de vis, la tige filetée étant complémentaire d'un trou horizontal taraudé (300) situé sur la partie basse (30),
la partie basse (30) comporte un pied (8) réglable en hauteur situé dans le prolongement de la partie basse.

2. Pièce d'accouplement selon la revendication 1, **caractérisée en ce que** la partie haute (31) forme un organe mâle d'emboîtement et est destinée à émerger du fourreau (2) dans lequel la partie basse (30) est encastrée, l'organe mâle d'emboîtement étant destiné à être emboîté dans un poteau creux.

3. Pièce d'accouplement selon l'une quelconque des revendications précédentes, **caractérisée en ce que** la partie basse (30) présente deux zones à forme variable (4) séparées en hauteur l'une de l'autre sur la partie basse.

4. Pièce d'accouplement selon l'une quelconque des revendications précédentes, **caractérisée en ce que** chaque zone à forme variable (4) comporte trois éléments de contact externe (5) extensibles dans un plan perpendiculaire à l'axe d'insertion, les trois éléments de contact externe étant régulièrement répartis autour de la partie basse.

5. Pièce d'accouplement selon l'une quelconque des revendications 1 à 3, **caractérisée en ce que** chaque zone à forme variable (4) comporte quatre éléments de contact externe (5) extensibles dans un plan perpendiculaire à l'axe d'insertion, les quatre éléments de contact externe étant régulièrement répartis autour de la partie basse.

6. Pièce d'accouplement selon l'une quelconque des revendications 1 à 5, **caractérisée en ce que** chaque moyen de réglage en extension comporte un moyen de blocage en extension prenant la forme d'un écrou (7) couplé sur la tige filetée (61) entre la tête de vis (60) et le trou horizontal taraudé (300).

7. Pièce d'accouplement selon l'une quelconque des revendications 1 à 6, **caractérisée en ce que** le pied (8) réglable en hauteur comporte une tige filetée (81) complémentaire d'un trou vertical taraudé (301) situé sur la partie basse (30), et un écrou de blocage (82) du réglage en hauteur.

## Patentansprüche

1. Kopplungsteil zum Koppeln eines Pfostens (1) mit einer Rohrhülse (2), die in einem Boden einzementiert ist, wobei die Rohrhülse einen Hohlraum (20) aufweist, der dazu bestimmt ist, das untere Ende eines Pfostens entlang einer Einführungsachse aufzunehmen, aus einem Adapter (3) bestehend, der umfasst:
- einen unteren Abschnitt (30), der mindestens eine Zone mit variabler Form (4) aufweist, die mindestens ein äußeres Kontaktelement (5) beinhaltet, das in einer Ebene senkrecht zur Einführungsachse erweiterbar ist, wobei jedes äußere Kontaktelement einem Erweiterungseinstellmittel zugeordnet ist, welches es ermöglicht, den unteren Abschnitt dem Hohlraum der Rohrhülse in Hinblick darauf anzupassen, sie durch einen Einbau zu koppeln und den unteren Abschnitt in der Rohrhülse festzuhalten;
- einen oberen Abschnitt (31), der dazu bestimmt ist, an die Basis eines Pfostens gekoppelt zu werden,
**dadurch gekennzeichnet, dass** jedes äußere Kontaktelement (5) aus einem Schraubenkopf (60) besteht, das zugeordnete Erweiterungseinstellmittel aus einem Gewindestift (61) besteht, der sich aus dem Schraubenkopf heraus erstreckt, wobei der Gewindestift ergänzend zu einer horizontalen Gewindebohrung (300) ist, die sich am unteren Abschnitt (30) befindet, der untere Abschnitt (30) einen höheneinstellbaren Fuß (8) beinhaltet, der sich in der Verlängerung des unteren Abschnitts befindet.

2. Kopplungsteil nach Anspruch 1, **dadurch gekennzeichnet, dass** der obere Abschnitt (31) ein Einführsteckorgan bildet und dazu bestimmt ist, aus der Rohrhülse (2) herauszuragen, in welche der untere Abschnitt (30) eingebaut ist, wobei das Einführsteckorgan dazu bestimmt ist, in einen hohlen Pfosten eingeführt zu werden.

3. Kopplungsteil nach einem der vorstehenden Ansprüche, **dadurch gekennzeichnet, dass** der untere Abschnitt (30) zwei Zonen mit variabler Form (4) aufweist, die im unteren Abschnitt in der Höhe voneinander getrennt sind.

4. Kopplungsteil nach einem der vorstehenden Ansprüche, **dadurch gekennzeichnet, dass** jede Zone mit variabler Form (4) drei äußere Kontaktelemente (5) beinhaltet, die in einer Ebene senkrecht zur Einführungsachse erweiterbar sind, wobei die drei äußeren Kontaktelemente regelmäßig um den unteren Abschnitt herum verteilt sind.

5. Kopplungsteil nach einem der Ansprüche 1 bis 3, **dadurch gekennzeichnet, dass** jede Zone mit variabler Form (4) vier äußere Kontaktelemente (5) beinhaltet, die in einer Ebene senkrecht zur Einführungsachse erweiterbar sind, wobei die vier äußeren Kontaktelemente regelmäßig um den unteren Abschnitt herum verteilt sind.

6. Kopplungsteil nach einem der Ansprüche 1 bis 5, **dadurch gekennzeichnet, dass** jedes Erweiterungseinstellmittel ein Erweiterungsblockierungsmittel beinhaltet, welches die Form einer Mutter (7) annimmt, die zwischen dem Schraubenkopf (60) und der horizontalen Gewindebohrung (300) an den Gewindestift (61) gekoppelt ist.

7. Kopplungsteil nach einem der Ansprüche 1 bis 6, **dadurch gekennzeichnet, dass** der höheneinstellbare Fuß (8) einen Gewindestift (81) ergänzend zu einer vertikalen Gewindebohrung (301) beinhaltet, die sich an dem unteren Abschnitt (30) befindet, und eine Mutter zum Blockieren (82) der Höheneinstellung.

## Claims

1. Coupling part for the coupling of a post (1) to a sheath (2) sealed in the ground, the sheath having a cavity (20) intended to receive the low end of a post according to an insertion axis, consisting of an adapter (3) comprising:
- a low portion (30) having at least one zone with a variable shape (4) comprising at least one outer contact element (5) extensible in a plane perpendicular to the insertion axis, each outer contact element being associated with a means for adjusting the extension making it possible to adjust the low portion to the cavity of the sheath for the purpose of coupling them via embedding and maintaining the low portion fixed in the sheath;
- a top portion (31) intended to be coupled to the base of a post,
**characterised in that** each outer contact element (5) consists of a screw head (60), the associated means for adjusting the extension consists of a threaded rod (61) extending from the screw head, the threaded rod being complementary with a horizontal tapped hole (300) located on the low portion (30),
the low portion (30) comprises a foot (8) that can be adjusted in height located in the extension of the low portion.

2. Coupling part according to claim 1, **characterised in that** the top portion (31) forms a male engagement member and is intended to emerge from the sheath (2) wherein the low portion (30) is embedded, the male engagement member being intended to be embedded in a hollow post.

3. Coupling part as claimed in any preceding claim, **characterised in that** the low portion (30) has two zones with a variable shape (4) separated in height from one another on the low portion.

4. Coupling part as claimed in any preceding claim, **characterised in that** each zone with a variable shape (4) comprises three outer contact elements (5) extensible in a plane perpendicular to the insertion axis, the three outer contact elements being regularly distributed around the low portion.

5. Coupling part according to any of claims 1 to 3, **characterised in that** each zone with a variable shape (4) comprises four outer contact elements (5) extensible in a plane perpendicular to the insertion axis, the four outer contact elements being regularly distributed around the low portion.

6. Coupling part according to any of claims 1 to 5, **characterised in that** each means for adjusting the extension comprises a means for blocking in extension taking the form of a nut (7) coupled on the threaded rod (61) between the screw head (60) and the horizontal tapped hole (300).

7. Coupling part according to any of claims 1 to 6, **characterised in that** the foot (8) that can be adjusted in height comprises a threaded rod (81) complementary with a vertical tapper hole (301) located on the low portion (30), and a lock nut (82) for the adjustment in height.
